# EUROPEAN PATENT APPLICATION

(11) **EP 2 477 343 A1**
(43) Date of publication of application: **18.07.2012**
(21) Application number: 11290012.1
(22) Date of filing: 13.01.2011
(51) Int. Cl.: H04B 7/06

(54) **Cooperating cluster for wireless transmissions**

(71) Applicant: Alcatel Lucent, 75007 Paris (FR)
(72) Inventor: Yu, Xin, 70435 Stuttgartq (DE); Bohn, Thomas, 70372 Stuttgart (DE); Haslach, Christoph, 70178 Stuttgart (DE)
(74) Representative: Kohler Schmid Möbus

(57) **Abstract**

The invention relates to a method for performing wireless transmissions in a communication network (1), the method comprising: forming a cooperating cluster (CL) of a plurality of mobile terminals (MT) of the communication network (1), and using the cooperating cluster (CL) for performing wireless transmissions in the communication network (1). The cooperating cluster (CL) may in particular form a sub-base station (SBS) defining a coverage area (C_{SBS}) for providing wireless transmissions to at least one further terminal, in particular to at least one further mobile terminal (MT), of the communication network (1). The invention also relates to a mobile terminal (MT_{CL}), to a cooperating cluster (CL), and to a wireless communication network (1).

## Description

### Field of the Invention

The invention relates to the field of telecommunications, and, more specifically, to wireless transmissions in a communication network.

### Background

This section introduces aspects that may be helpful in facilitating a better understanding of the invention. Accordingly, the statements of this section are to be read in this light and are not to be understood as admissions about what is in the prior art or what is not in the prior art.

It is well known that the applications of mobile terminals, in particular of cell phones, are limited e.g. because of their low data throughput, low transmit power,... In particular, mobile terminals have only a limited number (typically only one) antenna which may be used to perform communications with a base station.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

According to one aspect, a method for performing wireless transmissions in a communication network is provided, the method comprising: forming a cooperating cluster of a plurality of mobile terminals of the communication network, typically by establishing direct links between the mobile terminals, and using the cooperating cluster for performing wireless transmissions in the communication network.

According to the present method, it is proposed to form a cluster, resp., a group of mobile terminals which are capable of performing direct communications with each other by establishing direct links with each other (i.e. without using a base station as an intermediary). The links between the mobile terminals of the cluster are in general provided using the wireless resources of the wireless communication network.

By providing the cooperating cluster, data may be shared directly between the mobile terminals of the cluster via the direct links, such that the mobile terminals of the cluster may be used to provide communications with other entities in the communication network with improved throughput. This is possible as the mobile terminals of the communication cluster have a plurality of antennas, each with its own transmit power, such that the overall power of the transmissions of the cooperating cluster to other entities in the network may be increased, typically leading to a higher throughput by combining the sending signals of each mobile terminal of the cluster in the air.

In this way, the wireless data throughput can be significantly improved with minimal impact on an existing wireless network. It will be understood that the communications which are performed inside the cluster are typically using the same resources as the wireless network, i.e. the technology used for communications inside of the cluster is the same as the technology which is used throughout the rest of the wireless network.

It will be understood that typically the mobile terminals which participate in the cooperating cluster are arranged in a certain area close to each other, and that the creation and dissolution of a cooperating cluster may be performed dynamically, basically anywhere in the communication network where a sufficient number of mobile terminals (at least two) is available. Typically, the higher the number of mobile terminals in the cluster, the better.

In one variant, the method further comprises: synchronizing the plurality of mobile terminals of the cooperating cluster, and performing cooperative wireless transmissions with the cooperating cluster using at least one of MIMO and beamforming. The multi-terminal cluster may increase the data throughput by using advanced technology, e.g. beam-forming or MIMO, using the plurality of antennas which is available in the cooperating cluster. Thus, a cooperating cluster looks rather similar to an ordinary MIMO system, but comprises many low-power transceivers instead of one high-power transceiver in a macro base station.

For performing the beamforming, at least one of the phases and relative amplitudes of the wireless transmissions of different mobile terminals of the cooperating cluster may be adjusted in a suitable way. In the present context, the term "beamforming" refers to transmissions of the same signal using multiple antennas of the mobile terminals of the cluster with appropriate phase (and possibly with appropriate relative amplitude / gain) weighting (precoding) to increase the received signal gain by making the signals emitted from the different antennas add up constructively, and to reduce the multipath fading effect.

The term "MIMO transmissions" refers to a technique in which the spatial distribution of the mobile terminals allows to perform e.g. spatial multiplexing and/or diversity coding. In spatial multiplexing, a high rate stream is split into multiple lower-rate streams and each stream is transmitted from a different transmit antenna in the same frequency channel. If these signals arrive at the receiver antenna array with sufficiently different spatial signatures, the receiver may separate them into (almost) parallel channels. Diversity coding is used when there is no channel knowledge at the transmitter, and techniques which are referred to as space-time coding are used.

Cooperative transmissions using beamforming / MIMO may be used e.g. for performing transmissions of the cooperative cluster with a base station, or with other mobile terminals of the communication network. For instance, one possibility is that the cooperating cluster performs beamforming for increasing throughput of transmissions with the base station, and also performs transmissions with a further mobile terminal of the communication network, possibly via a high-speed link which may be established as a wire-line or a wireless link. In particular, a high-speed wireless link with the further mobile terminal may be established when the distance between the further mobile terminal and the cluster is low, enabling to use high transmission power on the link without requiring cooperative transmissions, still providing high throughput on the link. It will be understood that also a mobile terminal which forms part of the cluster may search assistance from a plurality of other terminals of the cluster for improving throughput for communications with the base station.

In one preferred variant, the cooperating cluster forms a sub-base station defining a coverage area for providing wireless transmissions to at least one further terminal, in particular to a further mobile terminal of the communication network. In this variant, a "free" sub-base station may be formed by the cluster (distributed system of mobile terminals), which allows to replace the (static) base station in a certain area of radio coverage.

Theoretically, a mobile terminal (e.g. a cell phone, PDA, laptop, ...) already forms a mini base-station, as the fundamental hardware for a base-station is already available e.g. in a cell phone, yet the limitations of a single cell phone are the low computing capacity, and low sending / transmission power. These problems may be solved, however, by uniting a number of cell phones to form a distributed "free" sub-base station. The mobile terminals / cell phones registered in the coverage area of the sub-base-station may communicate with each other without the normal base-station. Thus, this application is ideally suited for areas where no or only limited radio coverage from a normal base-station is available (for example in areas in which transmissions with the base stations are obstructed, for instance in buildings etc.). It will be understood that the cluster which forms the sub-base station may also be capable of performing beam-forming or MIMO transmissions with the terminals which are served by the cluster.

As indicated above, mobile terminals registered in this free sub-base-station may be connected to each other without interaction with the normal base-station. The number of mobile terminals / cell phones for forming a sub-base station and their operation manner may be varied according to the requirements of data throughput and/or coverage area of the sub-base station.

In one improvement, the method further comprises: performing transmissions between the sub-base station and at least one further sub-base station which is formed by a further cooperating cluster of mobile terminals, the further sub-base station having a further coverage area which at least partially overlaps with the coverage area of the sub-base station. If there are several sub-base-stations composed of mobile terminals / cell phones which are physically close to each other, direct communications between the sub-base-stations may be performed as well, thus enabling terminals which are registered / served by one cooperating cluster to communicate with terminals which are registered by the other cooperating cluster without using (macro) base station as an intermediate entity.

Moreover, the sub-base station may communicate with at least one further wireless or wire-line network, e.g. with the help of appropriate adapters. In this way, the sub-base station and also the terminals served by the sub-base station may communicate with physical entities which are not located in the area of radio coverage of the sub base station, possibly not even in the area of radio coverage of the wireless communication network.

A further aspect relates to a mobile terminal, being adapted to communicate with a plurality of further mobile terminals for forming a cooperating cluster of mobile terminals. For instance, the mobile terminal may be adapted to send a message to other mobile terminals including a request to set up a cooperating cluster, or a message which allows to register to an existing cooperating cluster. In this way, a cooperative cluster (also referred to as a cell phone group in the following) may be settled anywhere, anytime, if several cell phones which have the required functionalities are available. If the applications for which the cell phone group has been set up are no longer needed, the cell phone group may be dissolved, and each cell phone may be separately used as normal cell phone.

In one embodiment, the mobile terminal is adapted to perform at least one of MIMO transmissions and beamforming with the other mobile terminals of the cooperating cluster. As indicated above, these advanced technologies may be used to increase the throughput for communications between the cluster and other entities of the network.

A further aspect relates to a cooperating cluster, comprising: a plurality of mobile terminals as described above, i.e. capable of establishing a cooperating cluster, also capable to establish direct links between the mobile terminals. In particular when mobile terminals of different manufacturers are used, a standardized procedure for performing direct communications on the links between the mobile terminals of the cluster has to be established.

In one embodiment, the mobile terminals are adapted to adjust at least one of phases and relative amplitudes of their wireless transmissions for performing the beamforming. Appropriate precoding for adjusting the phases (and possibly the weights of the amplitudes) of the individual signals enables the mobile terminals to emit from the different antennas signals which add up constructively, thus increasing the signal gain at a receiver. It will be understood that MIMO techniques such as spatial multiplexing or space-division multiple access may be applied as well.

In a further embodiment, the cooperating cluster is implemented as a sub-base station defining a coverage area for providing wireless transmissions to at least one further terminal, in particular to at least one further mobile terminal. As indicated above, the cooperating cluster may serve as a (sub-)base station which may be arranged at an arbitrary location in the network, providing essentially the same functionality as an ordinary base station, i.e. serving terminals which may register to the sub-base station.

In particular, certain areas of the network may be identified in which communications with a base station are obstructed / difficult. If the network (or a base station, for example) recognizes that such an area exists, the base station may incite mobile terminals close to that area or arranged inside that area to form a cooperating cluster, e.g. by sending messages to these mobile terminals informing them that other terminals are available for forming the cluster.

Yet another aspect relates to a communication network comprising at least one cooperating cluster as described above. As indicated above, two or more cooperating clusters may perform direct communications with each other and/or with other wireless or wire-line networks for extending their area of coverage. In any case, using at least one cooperating cluster, the throughput of a wireless network may be increased with minimal impact on the resources of the wireless network.

A person of skill in the art will readily recognize that various steps of the above-described method(s) can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of the above-described methods. The program storage devices may be, e.g., digital memories, magnetic storage media such as magnetic discs and magnetic tapes, hard drives, or optically readable digital data storage media. The embodiments are also intended to cover computers, field programmable gate arrays (FPGA), application-specific integrated circuits (ASIC), or digital signal processors (DSP) programmed to perform the steps of the above-described method(s). Other hardware conventional and/or custom may also be included. Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of a communication network with a cooperating cluster of cell phones,
- **Fig. 2**: shows the network of Fig. 1 with a cooperating cluster forming a sub-base station,
- **Fig. 3**: shows two sub-base stations which communicate directly with each other, and
- **Fig. 4**: shows a sub-base station which communicates directly with another network.

### Detailed Description of Preferred Embodiments

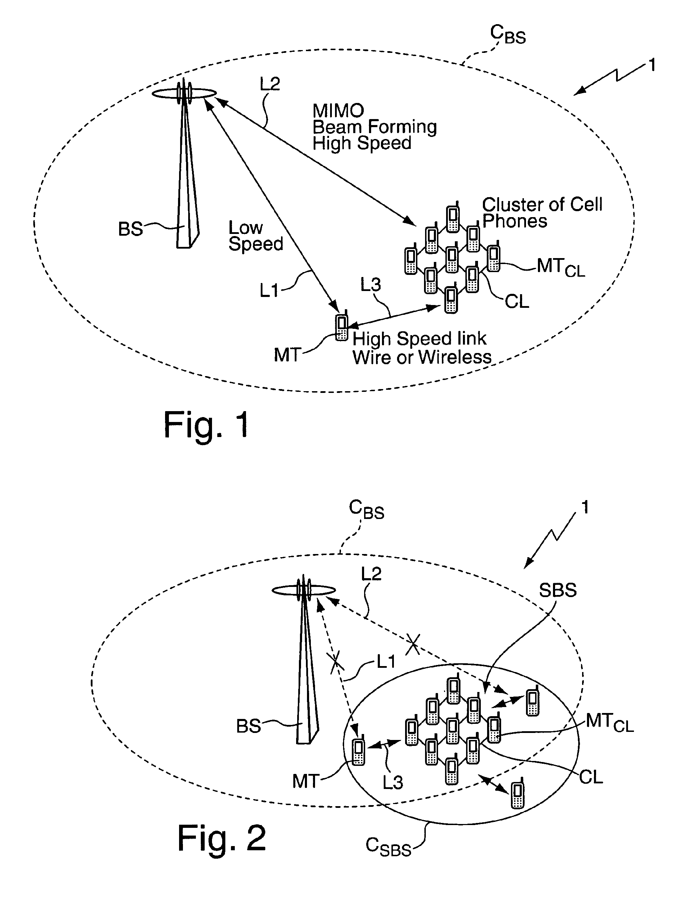

**Fig. 1** shows a communication network 1 which has a plurality of base stations, only one base station BS being shown for the sake of simplicity. The base station BS defines an area of radio coverage C_{BS}, also referred to as a cell. In a typical communication network, the base station BS communicates with a mobile terminal MT arranged in the are of radio coverage C_{BS} over a link L1 and communicates with other mobile terminals over further links (not shown). Now, depending e.g. on the distance of the mobile terminal MT to the base station BS, on the transmit power of the mobile station MT, and on the radio conditions in the vicinity of the mobile station MT, the quality of the link L1 to the base station BS may vary.

In the present example, the quality of the link L1 to the base station is low, and consequently, the throughput on the link L1 is also low, as indicated in Fig. 1. The low link quality may be problematic in particular when applications with high throughput are to be performed. For instance, if several friends meet somewhere and one of them wants to show his friends some traffic-intensive applications on his mobile terminal MT (cell phone, PDA, laptop, etc.) such as video, gaming, etc., the data throughput of the link L1 between the base-station BS and the mobile terminal MT may be too low.

In case that several friends have a cell phone with him, the following procedure may be performed: The mobile terminals of the friends may be used to form a cooperating cluster CL. Thus, each mobile terminal MT_{CL} of the cooperating cluster CL performs direct communications with at least one other mobile terminal MT_{CL} of the communication cluster CL, i.e. direct links are set up between the mobile terminals MT_{CL} which belong to the cooperating cluster CL.

The direct links may be used to transmit both data and signaling, allowing the mobile terminals MT_{CL} to cooperate.

In this way, the cooperating cluster CL which forms a multi-cell-phone system may make use of the plurality of antennas and thus the high transmit power which can be provided by the mobile terminals MT_{CL} which participate in the cluster CL, especially if the sending power/signal of each mobile terminal MT is combined in air. In this way, the cooperating cluster CL may be used to set up a high-speed link L2 to the base station BS with considerably improved data throughput.

The mobile terminal MT which requires the high data throughput with the base station BS is connected to the cooperating cluster CL via another high-speed link L3, which may be established as a wire-line (e.g. via cabling) or a wireless link. If the link L3 between the mobile terminal MT and the cooperating cluster CL is established as a wireless link, the throughput on this link L3 may be considerably improved as compared to the link L1 between the mobile terminal MT and the base station BS, as the mobile terminal MT which requests the high throughput (e.g. for showing videos etc.) is arranged closer to the cooperating cluster CL as the base station BS. Of course, the mobile terminal MT may itself be part of the cooperating cluster CL, such that no additional link has to be established.

There are different options for performing high-speed transmissions on the link L2 between the cooperating cluster CL and the base station BS. In one example, the mobile terminals MT_{CL} / cell phones are arranged at (essentially) static locations, such that the phase and possibly also the relative amplitude of the signals transmitted by the antennas of the mobile terminals MT_{CL} of the cooperating cluster CL are adjusted such that beam-forming can be performed on the link L2 to the base station BS, i.e. the signals emitted from the different antennas add up constructively in the receiving base station BS.

Alternatively, the cell phones MT_{CL} of the cooperating cluster CL may be seen as a one-, two-, or three-dimensional antenna array for performing MIMO communications with the base station BS, e.g. using spatial multiplexing or diversity coding. Depending on the algorithm, the distribution of the cell phones MT_{CL} may be arbitrary or pre-defined. For keeping the distances between the mobile terminals MT_{CL} constant, the mobile terminals MT_{CL} may be arranged e.g. in a common holding device, having a holder for each mobile terminal MT, the holders being spaced at appropriate (pre-defined) distances.

In any case, by performing cooperative transmissions with the cooperating cluster CL, data throughput to the base station BS may be increased without (significant) changes at the base-station BS itself. Of course, on the part of the mobile terminals MT_{CL} which participate in the cooperating cluster CL, some additional work has to be done, i.e. the mobile terminals MT_{CL} of the cooperating cluster CL may be connected and/or synchronized to each other and control processes may be performed to manage the multi-user applications.

A further way how the cooperating cluster CL may be used will be described in the following with reference to **Fig. 2****.** Theoretically, each mobile terminal MT is a mini base-station. The fundamental hardware for a base station BS is actually available also in a mobile terminal MT such as a cell phone. The limitations of the single mobile terminal MT are low computing capacity, and low sending power. But these problems may be solved by uniting a number of mobile terminals MT_{CL} of the cooperating cluster CL to a distributed free sub-base-station SBS, as indicated in Fig. 2. The sub-base station SBS provides essentially the same functionality as the (macro) base station BS, i.e. it allows mobile terminals MT which are arranged in the area of radio coverage C_{SBS} of the cooperating cluster CL to register and to perform direct communications with the sub-base station SBS via (high-speed) links L3.

In this way, mobile terminals MT registered in the coverage area C_{SBS} of the sub-base-station SBS can communicate with each other without using the "normal" macro base-station BS. This is particularly useful in an area where no coverage (or capacity) of the "normal" base-station BS is available, as indicated by dashed lines of the links L1, L2 of Fig. 2, showing that these links are not available. It will be understood that the sub-base-station SBS is beam-forming and/or MIMO capable. Moreover, one skilled in the art will appreciate that the number of mobile terminals MT which are combined in a cooperating cluster CL and their operation manner may be varied according to the requirements of data throughput and/or coverage area C_{SBS} of the sub-base station SBS.

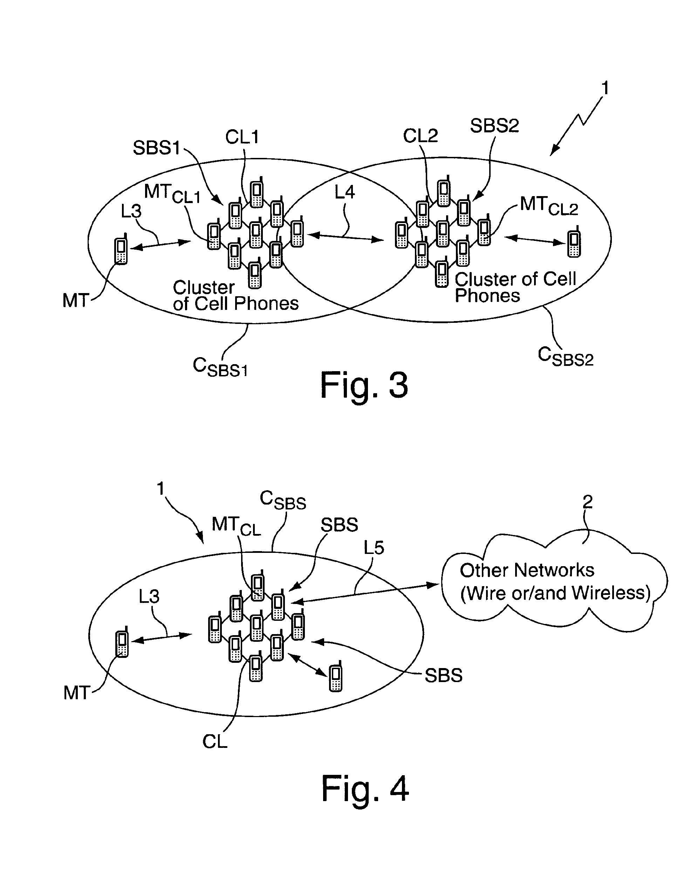

As indicated in **Fig. 3****,** if there are several sub-base-stations SBS1, SBS2 composed of respective mobile terminals MT_{CL1}, MT_{CL2} of respective cooperating clusters CL1, CL2 which are physically close to each other such that the respective coverage areas C_{SBS1}, C_{SBS2} partially overlap, it is possible to perform direct communications between the sub-base-stations SBS1, SBS2 via a high-speed link L4, typically using cooperative transmissions using beamforming and/or MIMO.

Moreover, as shown in **Fig. 4****,** a "free" sub-base-station SBS is capable to connect with other networks 2 via another (high-speed) link L5, e.g. using a suitable adapter (not shown in Fig. 4). Therefore, the registered cell phone MT of the sub-base station SBS may not only exchange data with other mobile terminals within the coverage area C_{SBS} of the sub-base station SBS, but also with other networks 2, e.g. wire-line networks arranged outside of the coverage area C_{SBS}. For instance, one or more of the mobile terminals MT_{CL} of the sub-base station SBS may be connected to a backbone network via a wire-line or a wireless connection.

It will be understood that the concept of clustering of a plurality of mobile terminals is a dynamical concept which may be used in particular when the need for wireless communications is temporary, or when wireless communications cannot be performed otherwise. According to different data throughput requirements of the requested application(s), the number of available cell phones in a cooperating cluster CL of distributed cell phones MT_{CL} may be adapted, as well as the operation manner of the cell phones MT_{CL} which participate in the cooperation cluster CL. It will be understood that typically more cell phones MT in the cluster CL provide for higher sending power, higher data throughput, etc.

As indicated above, the cooperating cluster CL of mobile terminals MT may be set up basically anywhere, anytime, provided that several cell phones with the required functionality are available. If the applications which are provided by the cell phone group are no longer needed, the cooperating cluster CL (i.e. the group) of mobile terminals MT_{CL} may be dissolved, and each mobile terminal MT may be separately used, e.g. as a "normal" cell phone.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Method for performing wireless transmissions in a communication network (1), the method comprising:
forming a cooperating cluster (CL) of a plurality of mobile terminals (MT) of the communication network (1), and
using the cooperating cluster (CL) for performing wireless transmissions in the communication network (1).

2. Method according to claim 1, further comprising: synchronizing the plurality of mobile terminals (MT_{CL}) of the cooperating cluster (CL), and performing cooperative wireless transmissions with the cooperating cluster (CL) using at least one of MIMO and beamforming.

3. Method according to claim 2, further comprising: adjusting at least one of phases and relative amplitudes of wireless transmissions of different mobile terminals (MT_{CL}) of the cooperating cluster (CL) for performing the beamforming.

4. The method according to any one of the preceding claims, comprising:
performing coordinated transmissions between the cooperating cluster (CL) and a base station (BS) of the communication network (1).

5. The method according to any one of the preceding claims, comprising:
performing transmissions between the cooperating cluster (CL) and at least one further mobile terminal (MT) of the communication network (1), preferably via a high-speed link (L3).

6. The method according to any one of the preceding claims, wherein the cooperating cluster (CL) forms a sub-base station (SBS) defining a coverage area (C_{SBS}) for providing wireless transmissions to at least one further terminal, in particular to at least one further mobile terminal (MT), of the communication network (1).

7. The method according to claim 6, further comprising: performing transmissions between the sub-base station (SBS1) and at least one further sub-base station (SBS2) which is formed by a further cooperating cluster (CL2) of mobile terminals (MT_{CL2}), the further sub-base station (SBS2) having a further coverage area (C_{SBS2}) which at least partially overlaps with the coverage area (C_{SBS1}) of the sub-base station (C_{SBS1}).

8. The method according to claim 6 or 7, wherein the sub-base station (SBS) communicates with at least one further wireless or wire-line network (2).

9. A mobile terminal (MT), being adapted to:
communicate with a plurality of further mobile terminals (MT) for forming a cooperating cluster (CL) of mobile terminals (MT_{CL}).

10. The mobile terminal according to claim 9, being adapted to perform at least one of beamforming and MIMO transmissions with the other mobile terminals (MT_{CL}) of the cooperating cluster (CL).

11. A cooperating cluster (CL), comprising:
a plurality of mobile terminals (MT_{CL}) according to claim 9 or 10.

12. Cooperating cluster according to claim 11, wherein the mobile terminals (MT_{CL}) are adapted to adjust at least one of phases and relative amplitudes of their wireless transmissions for performing the beamforming.

13. Cooperating cluster according to claim 11 or 12, being implemented as a sub-base station (SBS) defining a coverage area (C_{SBS}) for providing wireless transmissions to at least one further terminal, in particular to at least one further mobile terminal (MT).

14. A wireless communication network (1), comprising at least one
cooperating cluster (CL) according to any one of claims 11 to 13.
